# EUROPEAN PATENT SPECIFICATION

(11) **EP 0 564 528 B1**
(45) Date of publication and mention of the grant of the patent: **17.04.1996**
(21) Application number: 92901942.0
(22) Date of filing: 23.12.1991
(51) Int. Cl.: B64F 1/20

(54) **IMPROVED EQUIPMENT FOR GUIDING IN AZIMUTH BY LUMINOUS BEACONS**
VERBESSERTE ANLAGE ZUR FÜHRUNG IM AZIMUT MITTELS LICHTEMITTIERENDEN BAKEN
EQUIPEMENT AMELIORE POUR GUIDAGE AZIMUTAL EFFECTUE AU MOYEN DE BALISES LUMINEUSES

(30) Priority: 02.01.1991 FR 9100020
(43) Date of publication of application: 13.10.1993
(73) Proprietor: THORN EUROPHANE, F-75008 Paris (FR); THORN LIGHTING LIMITED, Borehamwood, Hertfordshire WD6 1HZ (GB)
(72) Inventor: TARROUX, Pierre, F-75016 Paris (FR)
(74) Representative: Fleming, Ian Alexander, Dr.
(86) International application number: GB9102305
(87) International publication number: WO9212052

(56) References cited:
- FR-A- 2 614 263
- GB-A- 502 974
- US-A- 1 912 928
- US-A- 3 305 826

## Description

The present invention relates to visual guiding in azimuth, in particular for an observer on board an aircraft or a ship, enabling this latter to be orientated on an approach path, for example to align itself with a landing strip or to set a bearing on the entry to a port.

It relates more particularly to an equipment for guiding, active within a capture zone defined with respect to angle around the approach path, of the type including at least a set of two luminous sources arranged with one cn each side of the approach path. Each of these sources is connected to some form of rotary drive so that together they produce two beams sweeping round in opposite directions, mutually synchronised in such a manner that one and the other are intermittently visible to the observer, in an order representative of the position of the approach path. For example, if the observer sees an initial flash of light followed shortly by a second flash more to the right, he will know that the approach path is to be found to the right, and vice versa. When the sequencing of the flashes is well adapted to the characteristics of human vision, an effect known as "tracer bullet" takes place, giving the illusion of one single source moving in the direction which the observer must follow in order to align himself with the approach path. This means of guiding is in principle particularly attractive for at least two reasons.

Firstly, it enables us to define the approach path without relying on guide lights extending towards the observer, beyond the material limits of the path. It will be realised in fact that there are many situations where it is not practicable, even impossible, to provide such guide lights, in particular when the observer must be guided when he is above the surface of water, as in the case of landing on aircraft-carriers, airports at the side of the sea, in addition to examples of marine navigation.

Secondly, indication of the azimuth by the "tracer bullet" effect shows itself in a form very intuitive for the observer, enabling the latter to minimise the reflection time before reacting. This is of particular importance for pilots of aircraft, who nave only a very short time to carry out their landing operations, especially if they are required to land on an aircraft-carrier.

British Patent GB.A.502974 gives an outline of an initial equipment for guiding in azimuth, based on the use of a system of light sources rotating in opposite directions as defined above. The information given in this document, however, is limited essentially to the principle of this type of guiding, and does not lay down the details which are essential for its practical application, which requires a considerably more advanced analysis of the signalling, in particular with regard to the quality of the light sources to be used and to human perception of the information so transmitted. It will in fact be observed that this document says nothing about the angle of opening of the light beams, the relations in time between the light flashes in each cycle of the sweep, or even the rate of rotation of the beams, except to state that this latter should remain constant.

Now, in course of investigations carried out independently by the applicant, dealing with the feasibility of an equipment for guiding in azimuth by means of beams rotating in opposite directions, it became apparent, amongst other things, that useful information can, on the contrary, be obtained only if the rate of sweep of each light source varies between the direction of the approach path and the boundaries of the capture path. The magnitude of this variation may be explained as follows: in order for the tracer bullet effect to be very clearly perceived, it is necessary for the interval between two flashes to lie between limits which are determined, amongst other factors, by the physiology of the eye. In fact, a very short interval, close to the threshold of retinal persistence, would give an effect of simultaneity, whilst a relatively long interval would on one hand not lead to the dynamic effect of the signalling, and on the other hand would lead to ambiguities in the sequencing of the flashes, if the interval happened to be comparable to a period of sweep. In consequence, in order to stay within these limits, it is necessary to reduce the variations of these intervals, which are functions of the angle between the two beams, by suitable adjustment of the rate of sweep. It has in fact been established that the more the rate of sweep tends to be constant, the more there is a requirement for beams collimated with great optical precision as compensation - partial only - for a loss of perception of the intermittent nature of the flashes at small deviations in azimuth. It has then been estimated that a sweep at constant rate with a luminous beam produced by the methods normally used cannot give a guiding in azimuth which satisfies the standards at present in force.

Thus the first equipment for guiding in azimuth by means of beams rotating in opposite directions which was proved to give adequate performance on site was described by the applicant in patent Fr.A.2614263, in which variation of the rate of sweep of the beam is stated to be essential for such equipment. The preambles of the independent claims 1 and 11 herein are based on this French Patent.

In one mode of realisation set out in this document, developed within the framework of a French standard for luminous signalling for approach paths, the equipment consists of two rotating light sources, synchronised and turning in opposite directions in such a manner that the beams emitted from the sources are always symmetrical of the areas swept by each of the sources. The limitation of these areas of sweeping is effected by means of occulting devices dividing the capture zone into two half-zones symmetrical with aspect to the approach path.

The light beams are defined by means of suitable optics, forming a field of a few degrees in azimuth, but extended in elevation, such that they can easily be seen by an aircraft with its direction of descent slightly different from that of the ideal approach.

The above-mentioned variation cf the rate of rotation V of the beam is described as following a sinusoidal function of the time t, a maximum rate V_{M} at the boundaries of the capture zone and a minimum rate Vₘ in the direction of the approach path, given by V = 2π/T - Vₒ cos (6πE/T) for a capture zone of 120°, where Vo is the semi-amplitude of the variation, ie. (V_{M} - Vₘ )/2 and T is the period of a complete revolution of the light.

Even if such a velocity profile has provided equipment making possible the guiding, it does not provide the solution to another problem, noticed when the observer seeks guiding information when he is only slightly off the approach path. There is, around every approach path, a range of tolerance of error in azimuth, defined in terms of an angle, within which the observer is not required to take corrective steps in his flight path. However, the observer cannot know whether or not he is within this range by relying only on the information derived from the luminous flashes from such an equipment, since the tracer bullet effect can still be detected within this range, dependent on the visual capabilities of the observer, his degree of attention and other variable factors. This uncertainty may become a serious disadvantage to the extent that the observer, concerned as to whether he is well within this tolerance region, tends to continue to correct his flight path uselessly by concentrating on the detection of flashes at smaller and smaller intervals, to the detriment of other matters requiring attention (even with the quoted law of optimum variation, the intervals between the two flashes reduce continually as the divergence becomes smaller and smaller, reaching zero for zero divergence).

It will be understood that this problem is particularly pressing in the case of a pilot required to carry out critical manoeuvres during his last approach before landing.

It will also be noted that any attempt at modification of the graph of velocity variation with the object of rendering undetectable the intervals within the range of tolerance (for example by making the intervals very close together) would lead to two problems: firstly it would be necessary to fix a detection threshold although this varies considerably between individuals, the attention paid to the signals, atmospheric conditions etc, and secondly the tracer bullet effect cannot be reduced at the extremes of this range by such a modification, due to the risk of creating a zone of uncertainty which would be even more damaging.

Hence one of the main objectives of the present invention is to reduce the disadvantages mentioned by suggesting an improved equipment for guiding in azimuth which is notable by the fact that it produces a tracer bullet effect which is very clearly discernible within a capture zone up to the boundaries of a range of tolerance of error in azimuth, while within this latter the light flashes are visible simultaneously.

The equipment of the present invention is characterised in that the sweeping action of the said beams in an equipment of the type described above with reference to French Patent A 2614263 is discontinuous over at least a central part (-E, +E) of the said capture zone, timing means being provided to cause each of the beams to be effectively stationary for a predetermined interval of time (-t1, +t1) when substantially aligned with said approach path to define a range of tolerance of error in azimuth within which the two beams are simultaneously visible to said observer and to undergo immediately before and after said interval of time an angular jump in their rotation over an angle less than or substantially equal to the angle of opening (α) of the beams. The invention is particularly suitable for guiding equipment in which the rate of rotation of the beams, at least in said capture zone is variable according to a generally sinusoidal function of time.

Preferably the timing means is arranged to cause each of the beams to undergo a succession of angular jumps in their rotation, separated by fixed time intervals.

Thus outside the range of tolerance of error in azimuth, only one of the beams is visible at any moment, the other appearing at the earliest at the following time interval. We can then fix this interval at a time period sufficient to give a tracer bullet effect, such that we obtain an all or nothing information on passing from a point just outside the range (tracer bullet guiding clearly towards the path) to a point close to the centre of this range (no interval in the flashes).

Other characteristics and advantages of the present invention will be seen more clearly from the following description of the preferred form of realisation. Reference will be made to the attached drawings on which:
- figure 1: shows the general arrangement of the light sources in accordance with the present invention;
- figure 2: is a graph showing the variation with time of the centres of the beams according to the art previously practised and the present invention;
- figure 3: shows in detail the arrangement of the beams around the approach path, according to one form of the present invention;
- figure 4: is a graph showing the variation with time of a beam during one complete cycle of rotation, according to one form of realisation of the present invention;
- figure 5: is a polar graph of the angular velocity of a beam curing one complete cycle of rotation;
- figure 6: is a greatly simplified vertical section of a light source in accordance with the present invention;
- figures 7 and 8: show the occultors used in the light source of figure 6; and

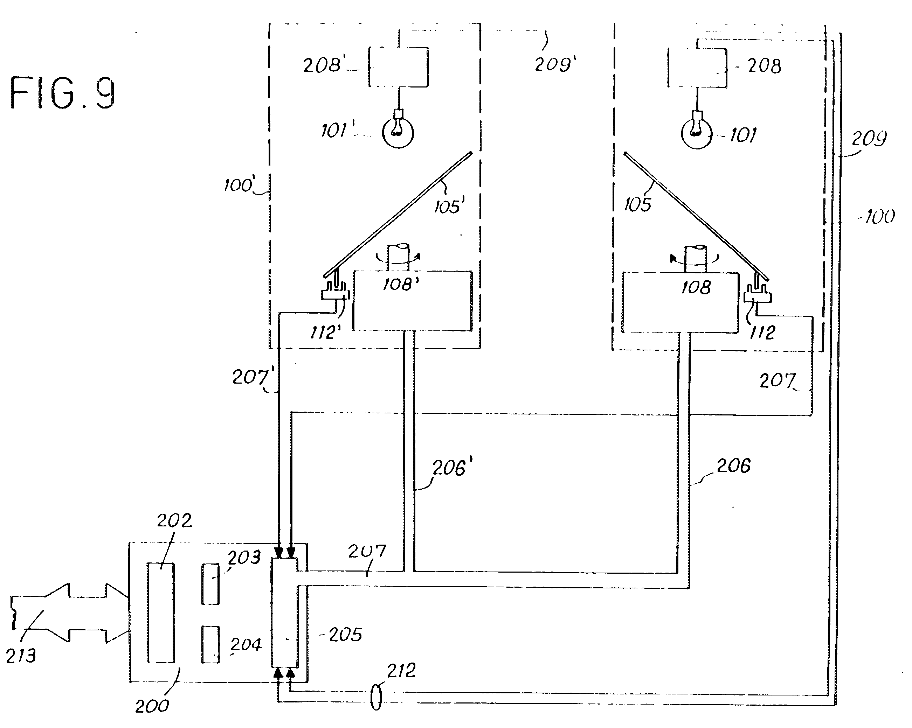

- figure 9: is a diagram of a system for control of the light sources in accordance with the present invention.

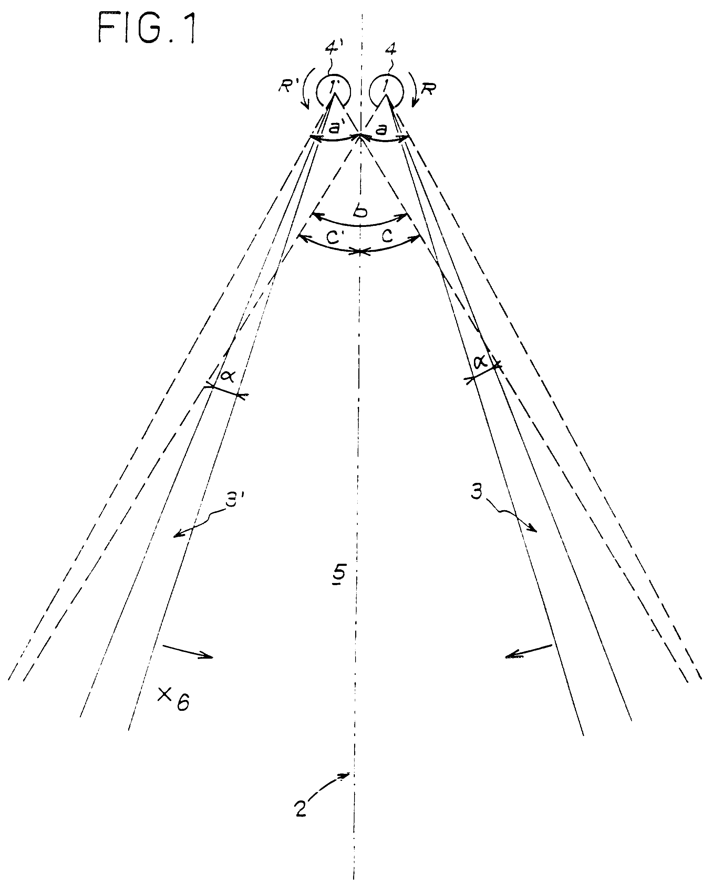

In the first place, in order to put the invention in better perspective, a brief description will be given, with reference to figure 1, of the general configuration of the light sources, which is similar to that described in patent application FR.A.2.614 263 in the name of the applicant.

In this example, the equipment consists of two light sources 1', 1 located one on each side of the approach path 2, synchronised in their sweeping action in opposite directions, in such a manner that the orientation of their respective beams 3', 3 is at all times symmetrical with respect to the path 2, at least in the capture zone (dotted zone 6). This is defined in angle on the two sides of the path 2 by means of shutters on each light source 1', 1. It is seen that in a symmetrical configuration (a=a'), as shown in figure 1, the angular range b of the capture zone 5 is equal to that, a' or a, of one or other of the light sources 1', 1, but is centred on the approach path 2. It will be seen, however, that the invention permits asymmetric configurations, in particular by making the angular ranges a and a' different by adaptation of the occultors 4, 4', is such a manner that the capture zone 5 is spread unequally about the path 2, one of its boundaries subtending an angle 1' (equal to a'/2) at this latter and the other subtending an angle c (equal to a/2).

The intemittence which can be detected by an observer 6 in the appearance of the light flashes of beams 3' and 3 can easily be analyzed by considering the respective trajectories of these latter. We will assume that the rotation in opposite directions of the beams 3', 3 is in the direction of their approach before they cross within the capture zone 5, as shown by the arrows R', R. Hence, the observer 6 who is off course towards the left of the approach path 2 (for example) will first seem beam 3' coming from source 1', sweeping from left to right, then beam 3 coming from source 1, sweeping from right to left. If the interval between these two flashes lies within the limiting boundaries stated above, the observer will perceive the tracer bullet effect in the form of a flash which seems to move from the position of source 1' towards that of source 1. Similar reasoning enables us to explain the tracer bullet effect in the case of an observer positioned to the right of the approach path. It follows from this that the motion perceived is always towards the path 2. It will be seen that, for evident reasons of clarity, it has not been possible to adhere to the scale used for the equipment shown in figure 1. In particular, the separation a between the two sources has been exaggerated compared with their distance from the observer 6. In a real situation, the light sources 1', 1 may be about fifty metres apart, enabling an observer to detect a difference in the origin of two successive flashes at a distance up to several kilometres.

In addition, in a typical form of realisation of the invention, the capture zone comprises an angle b of 30°, and the beams have an opening angle α of the order of 1°.

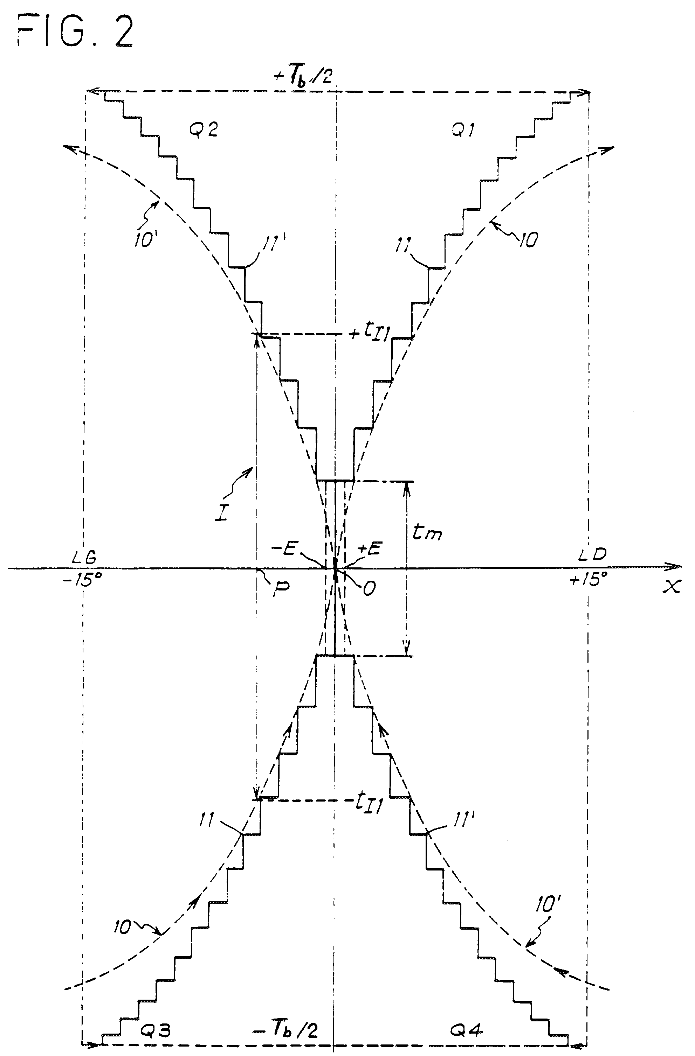

In order to provide a better understanding of the principle of sweeping by the beams in accordance with the invention, a comparison will first be given with the method of sweeping used in the previous art, with reference to figure 2.

This figure shows two pairs of curves 10',10 : 11',11 in the form of graphs in which the abscissa x represents the angular position of the axis of the beams with respect to an origin centred on the approach path, and the ordinate t represents the time elapsed. It will be seen that in the case of this graph, the capture angle is ± 15°, but the angle of the beams is not taken into account for reasons of simplification.

The graphs 10,10' shown dotted represent the angular position of the beams with the equipment used in the previous art, which uses a continuous sweep at variable speed. The graphs 10,10' exhibit two branches: one 10 S-shaped with a maximum in the first quadrant Q1 of the graph and falling towards the third quadrant Q3, passing through the origin which represents the path taken by the left-hand beam with respect to an observer within the capture zone, and the other shaped like an inverted S, with a maximum in the second quadrant Q2 and falling towards the fourth quadrant Q4, also passing through the origin, which represents the path taken by the right-hand beam.

This set of curves 10,10' makes it possible to determine the interval between the flashes from one and the other of the right-hand and left-hand beams, 10' and 10 respectively, as a function of the position in azimuth of the observer within the capture region. This interval is in fact given by the length of the line (I for example), parallel to the ordinate t, crossing the abscissa x at the point (P for example) corresponding to the azimuth angle whose value is being sought. Hence, in the case of an observer at point P, slightly to the left of the approach path, the first flash will originate from the left-hand beam 10, moving in the direction shown with an arrow, at a pre-determined time, -t_{I1} in the sweeping cycle (the "-" sign means that this flash is perceived before the beams intersect on the approach path, at time t = 0), and will be followed by the flash originating from the right-hand beam when this latter becomes directed towards point P, at time +t_{I1}. It will be seen from these graphs 10,10' that sweeping of the beams by a continuous motion of the light sources according to the previous art means that there is a time interval between the two flashes for any observer situated - however slightly - off the approach path.

We will now consider the graphs 11,11' showing the angular position of the beams coming from light sources, in the case of a discontinuous sweeping action, in accordance with the present invention. This discontinuity is shown in the diagram by the non-linearity of the curves 11,11', these latter being of the general shape of a staircase where the vertical parts indicate a stationary beam, whilst the horizontal parts indicate a moving beam. Thus the graph 11', for example, shows that the left-hand beam 3' moves in jumps starting from the left-hand limit LG of the capture zone at time -Tb/2 (quadrant Q3) until it reaches the right-hand limit LD of this latter at time +Tb/2 (quadrant Q1. The right-hand beam 3 (graph 11) moves in synchronism with the left-hand beam 3' from the right-hand limit (Quadrant 4) towards the left-hand limit LG (quadrant Q2) in such a manner that the two beams 3,3' sweep through the capture zone 5 in opposite directions in a set time Tb. It will be seen that one of these simultaneous stationary states of the two beams 3,3' takes place over an interval tₘ, when both of these are aligned on the approach path A and then cover a common angular range +E, -E about this path A. In the example shown it is assumed that the distance between the two light sources 1,1' is negligible compared with the distance of the observer P, so that the two beams coincide with the approach path A and are compietely merged on this range +E, -E, which is then equal to the angle of opening of the beams 3,3'. In addition it is shown that the angular displacements of the beams 3,3' between two stationary periods are constant and equal to their angle of opening α.

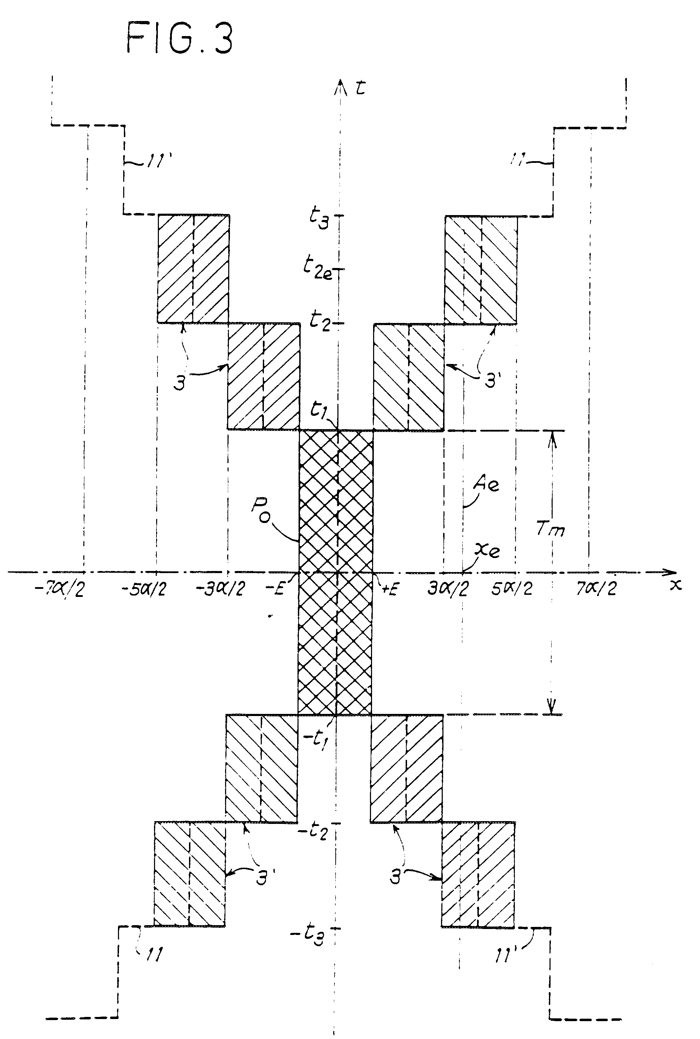

The relationships between the angular range +E, -E, the angle α and the sweeping effect of the beams 3,3' about the approach path A will be explained in greater detail by reference to figure 3.

In this figure, the movement of the centres of the left-hand beam 3' and the right-hand beam 3 is shown by the dotted lines 11',11 respectively. The beams 3',3 themselves are shown by a succession of hatched areas (with the hatching lines rising to the left for the left-hand beam 3' and rising to the right for the right-hand beam 3) which follow the corresponding dotted lines 11',11. The width of the areas corresponds to the angle of opening α of the beams 3',3 so that the areas show by this dimension the angular range of visibility of each of the beams within the capture zone close to the approach path A at given times on the time axis t. For example, figure 3 shows that, at time t₂ₑ (t₂ <t₂ₑ <t₃ on the t axis), the left-hand beam 3' is visible between an angle 3α/2 and 5α/2, and the right-hand beam is visible between an angle -3α/2 and -5α/2. It will be found from this example that these ranges of visibility remain unchanged between times t₂ and t₃ , but that beyond time t₃ the beams 3',3 make an angular jump and reappear with ranges of angles 5α/2 to 7α/2 and of -5α/2 to -7α/2 respectively.

In a more general manner, figure 3 shows that the beams 3',3 make jumps of α in opposite directions, at each time |tᵢ | (i=1,2,3) tending to bring them closer together in the capture zone for negative ti and push them further apart for positive ti. It will be noted that the sequencing is synchronised in such a manner that the two beams 3',3 merge at the level of the approach path (azimuth = 0°) over an angular range -α/2 to +α/2, during a specific interval t_{M} (from -t₁ to + t₁ ).

Figure 3 also enables us to follow the sequencing of the beams 3',3 with the passage of time for a selected azimuth angle x. The visibility times of one or other of the beams coincide with the traverse of one area of the corresponding beam. For example, for an azimuth angle x=xₑ (3α/2<xₑ <5α/2), the corresponding vertical axis is Ae; by following this axis from time -t₃ it is seen that the right-hand beam 3 is visible up to time -t₂, after which neither beam is visible up to time t₂, when the left-hand beam becomes visible up to time t₃. Hence an observer P situated at this angle will see in consequence the flashes from the right-hand light source 1, then the left-hand source 1', giving the effect of a tracer bullet moving to the left, where the approach path A is to be found. In this case, each of the two flashes is visible for a time equal to (t₂ - t₁) and separated by a time interval of 2t₂

It is thus easy to establish that for any observation angle included within the range x<|α/2|, the two beams will be seen perfectly simultaneously, over an interval tₘ between -t₁ and t₁. However, as soon as we move out of this range, the flashes appear in a sequenced manner as previously explained, being separated by an interval of at least tₘ (corresponding to observation angles x≥|-α/2| and x≤|3α/2|).

This discontinuity in the passage from simultaneity to sequencing of the beams 3',3 is put to very good use according to the present invention in order to provide precise beacons over an angular zone +E, -E error tolerance in azimuth which is clearly indicated to the observer by a perfect concomitance of the left-hand and right-hand flashes.

To do this, we adjust the parameters of the system for guiding in such a manner as to create a region of merging of the left-hand beam 3' and the right-hand beam 3, which coincides with the angular zone +E, -E of tolerance. In the simplified case of figure 3, it is sufficient to fix the angle of opening α, since this latter is directly linked to the angular zone by the equation |α/2|=|E|.

The period tₘ during which the two beams 3', 3 are stationary and illuminating the angular tolerance zone -E, +E corresponds also to the interval between the flashes from one or other of the beams on the edges of this zone (|α/2|<|x|<|3α/2|) and must in consequence be sufficient to make it possible to detect the tracer bullet effect at the said edges.

Thus, an observer outside the tolerance zone will always be guided distinctly by the tracer bullet effect until he reaches the tolerance zone of azimuth error -E, +E where the intermittent nature of the luminous signals 3', 3 ceases abruptly and they become visible in perfect coincidence. The observer is then clearly informed that it is no longer necessary to take steps to correct his flight path and can therefore deal with other duties, having only to verify from time to time that the flashes remain simultaneous. In the case of a drift, one clear effect of the guiding tracer bullet will enable him to change to the correct bearing without any intermediate blurred zone.

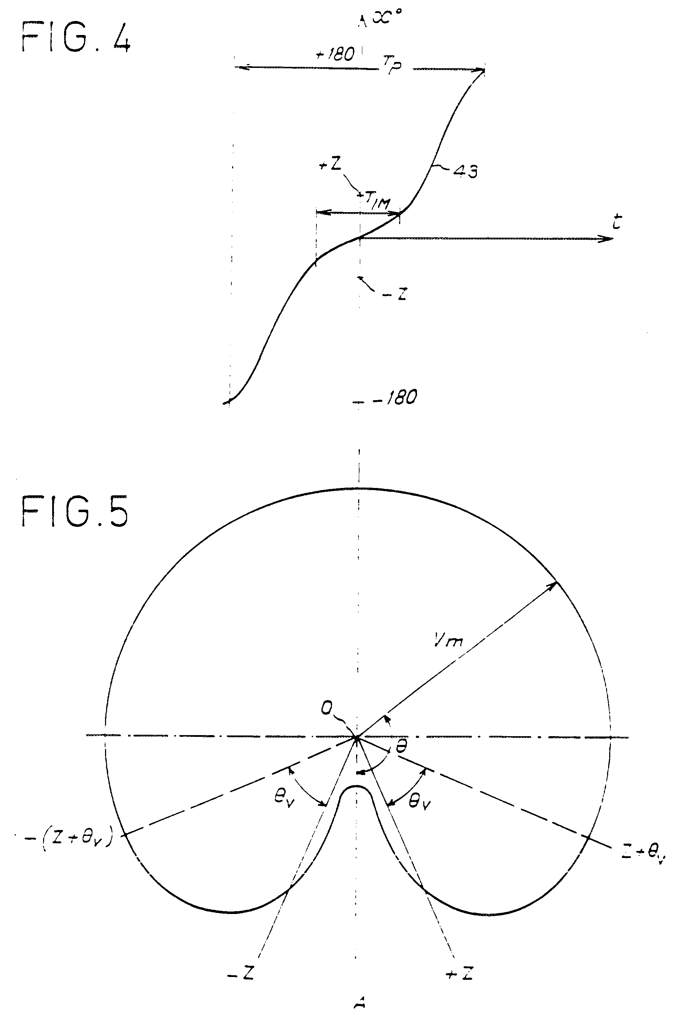

It will be seen that each, complete light signal, that is each set of simultaneous or sequenced flashes, must repeat itself in accordance with a pre-determined cycle, equal to the period of rotation Tₚ of the light sources 1',1 (figure 4). This period must be sufficiently long for there to be no ambiguity possible between, on the one hand, the flashes from the two beams 3',3 in one and the same cycle, and on the other hand, between the last visible flash of one cycle and the first visible flash of the following cycle. In this latter case, if a tracer bullet effect is observed created by flashes from two different cycles, the apparent motion would be in the direction away from the approach path A.

It has been found empiricaily that this type of error can be reliably avoided if the maximum interval T_{IM} (figure 4) between two flashes cf the same cycle (the case when the observer is at the limits ± Z of the capture zone) is less than or equal to 42% of the period of the cycle Tₚ . By way of an example, not a limitation, we can have Tₚ = 1s and T_{IM} = 1/3 s. This numerical case is shown on figure 4, which shows the change in the trajectories of one of the two beams over a complete cycle of rotation by means of graph 43, smoothed with respect to the stepped nature which it should really exhibit, with the angle of rotation x as ordinate and the time t as abscissa.

Thus for a given period of the cycle Tₚ, the maximum interval T_{IM} is limited above, whilst the minimum interval Tₘ (figure 3) is limited below, to the threshold of detection of lack of simultaneity giving a tracer bullet effect, at the edges of the zone -E, +E of tolerance to error. Between these two limits it is possible to vary the successive intervals between jumps in angle in the sweeping action of the beams 3',3 in such a manner as to give optimum quality of signal. Investigations carried out by the applicant have established that a particularly advantageous variation of these intervals could be obtained by making the graph 43 in the shape of a Bezier graph - used in particular in the automobile industry for characterisation of the curvatures of the sheets used for car body-work - with regard at least to the angular range -Z,+Z of the capture zone. It follows from this that the intervals between angular jumps in the sweeping of the beams vary inversely with the angle subtended by the beam with the approach path. Outside the limits of the capture zone, the manner of rotation of the light sources 1',1 is of little importance, since the essential feature is that each of the beams 1' can re-appear at the edge of the capture zone to which it is nearest after a time Tₚ - T_{IM} starting from the time when it leaves the most distant edge of this zone (it is easy to establish also that T_{IM} corresponds to the sweeping time of the capture zone).

Figure 5 shows, by way of example, a polar representation of the mean angular velocity of sweeping V_{M} of a light source over one complete rotation about its zero axis, as a function of the angle Θ of orientation of its beam with respect to the approach path A.

It will be seen that in this case the mean velocity V_{M} varies over a zone Θv outside the boundaries of the capture zone -Z,+Z in such a manner as to produce a smooth transition between the above-mentioned law and a constant velocity in order to minimise the stresses imposed on the mechanism driving the light sources 1',1.

There are many possible modes of sweeping under the present guiding system, all still remaining within the scope of the invention.

Whilst the figures show that the whole of the capture zone is swept by the discontinuous movements of the beams 3',3 it is clear that the definition of the error tolerance range -E, +E necessitates discontinuities in the sweeping by each of the beams only on both sides of this zone; in other words, by reference to figure 3, it would be possible to apply the present invention by carrying out a continuous sweep by the beams 3',3 up to an angle |x|<|3α/2|, all other conditions remaining unchanged.

It will be noted in addition that the step to be taken between a theoretical analysis of the invention and a practical application needs a relative meaning to be given to the term "discontinuous" used here. within the scope of the invention this will therefore be understood as any sufficiently rapid variation in the velocity of sweep of the beams 3',3 around the approach path, so as to define a clearly delimited range of tolerance of error in azimuth.

We must in fact understand by the term "discontinuous" any variation in the velocity of sweep by the beams, around the approach path, which is sufficiently rapid to lead to a region of tolerance of error wnich is clearly distinct from the remainder of the tolerance zone, as previously explained.

In addition, whilst the examples show a perfect right-left symmetry between the beams 3'.3 it is nevertheless possible, either to extend the capture zone more towards one side than the other by adjustment of the occulters, cr also to define a zone of tolerance of azimuth error which is asymmetric with regard to the approach path A, simply by making the areas swept (regions 3',3 of figure 3) eccentric with regard to this latter.

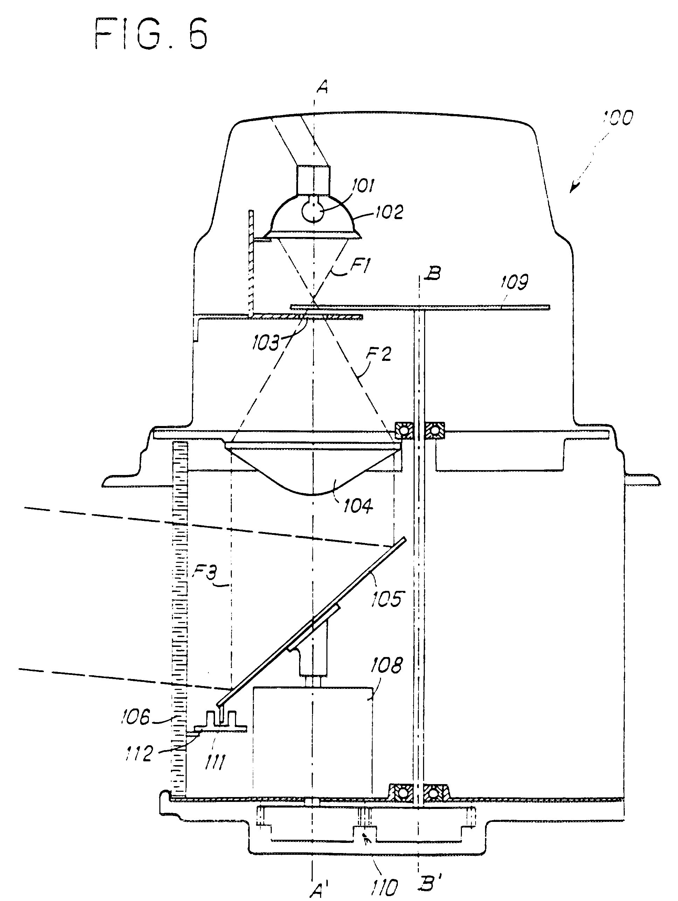

The present invention may be put in a concrete form using only methods already well known by the man skilled in the art, and will therefore be only briefly described with the help of figures 6 to 8.

Figure 6 shows a very much simplified longitudinal section of a light source 100 which can create the luminous beams of the present invention. The optical system comprises a bulb 101 surrounded by a reflector 102 so as to produce a beam F1 which converges towards a diaphragm 103. This latter has a rectangular opening of small dimensions, leading to a divergent beam F2 having a section of the same shape. This beam F2 falls on an aspherical lens 104 which produces a collimated beam F3 directed towards a plane mirror 105. The bulb 101, the diaphragm 103, the lens 104 and the mirror 105 are aligned along an axis AA', the mirror 105 being inclined to this axis in such a manner as to redirect the beam F3 through an exit window 106 inclined at a suitable angle. The section of the beam F3 determined by the rectangular opening of the mask 103 is narrow, so as to emit an exit beam with an angle of opening of about 1°. The mirror 105 is caused to rotate about the axis AA' by means of a step-by-step motor 108.

The capture zone is defined in angle by a rotating shutter 109 in the form of a disc passing between the bulb 101 and the mask 103, close to this latter. The shutter 109 is caused to rotate about its axis BB', parallel to axis AA' but at a distance from the latter. The shutter 109 (figure 107) takes the form of a disc of opaque matter with an area cut out in the shape of a sector 109b arranged with regard to the approach path A and whose angle b defines the capture zone, The beam F1 is thus intercepted by the opaque part 109a of the disc 109 in order to prevent any reflection by the mirror outside the capture zone.

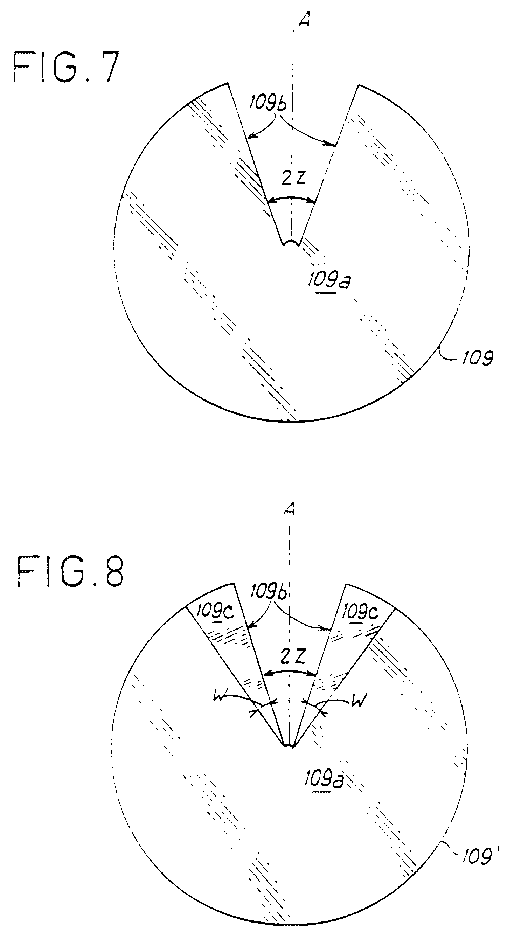

In a variant (figure 8) the shutter may carry a pair of coloured filters forming segments 109c which extend over a pre-determined angle W on each side of the cut out zone 109b. These filters enable us to provide a beacon by means of a coloured beam, giving a zone extending over an angular range W outside each edge of the capture zone with the object of indicating any drift which may occur, to an observer situated within this range.

The mirror 105 carries a projection 111 on its front surface close to its periphery. This projection cooperates with a fixed proximity detector 112, a Hall effect captor for example, to lead to the emission of a signal each time the angular position of the mirror corresponds to the reference position defined by the position of the detector 112. It is advantageous to select this reference position so as to correspond with an alignment of the reflected beam with the approach path.

Control of the equipment for guiding in azimuth is carried out from a central unit 200 which acts on a pair of light sources 100',100 producing respectively the left-hand and right-hand beams. The central unit 200 includes a microprocessor 202 functioning from a program and from data stored in the memories 203 and 204 and communicating with the exterior via interface circuits 205. The data memory contains a table of values corresponding to time intervals between each angular jump of the step-by-step motors 108', 108, indexed on the orientation of the respective beams, in such a manner as to move the beams in accordance with a set of rhythm of sweeping. The advancement controls of the motors 108',108 are transmitted along links 206',206 along which travel signals intended for specific entries making it possible to control the direction of rotation, the advance by a full step or half step, and the order to reset the rotor of the motors to a reference position. This latter control authorises a synchronisation during installation, or following a falling out of phase between the angular position of the mirrors 105',105 detected by the captors 112',112, whose signals are transmitted by dedicated links 207',207 to the interface 205.

It is advantageous if the central unit 200 also controls the supply to the lamps 101',101 of the light sources 100',100 by means of respective control panels 208',208 linked to the interface 205 by dedicated connectors 209',209. This control is bi-directional, enabling the central unit 200 to detect any misfunction of one of the lamps 101',101 and to stop the operation of the equipment should need arise.

It is preferable for the central unit 200 itself to be linked to an overall control centre via a bi-directional bus, so that amongst other things it will be possible to program the operational parameters of the equipment by remote control.

In certain cases consideration may be given to the installation of one or more arrangements (not illustrated) for de-frosting of the optical and/or mechanical parts of the sources 100',100, under control of the central unit 200.

## Claims

1. Equipment for guiding in azimuth from a distance, an observer (6) within a capture zone (5) defined in angle on the two sides of an approach path (2), the equipment comprising at least one set of two light sources (4, 4') located on the two sides of the approach path and connected by means of a rotary drive so that together they produce two sweeping beams (3, 3'), of substantially the same angle of opening (α) in the direction of said sweep, rotating in opposite directions and mutually synchronised so that each is intermittently visible to the said observer (6) in an order representative of the position of the said approach path (2), and simultaneously visible to the said observer when said observer is on said approach path, the rate of rotation of the beams, at least in the said capture zone, being variable, characterised in that the drive is arranged so that the sweeping action of the said beams is discontinuous over at least a central part (-E, +E) of the said capture zone, timing means being provided to cause each of the said beams to be effectively stationary for a predetermined interval of time (-t1, +t1) when substantially aligned with said approach path to define a range of tolerance of error in azimuth within which the two beams are simultaneously visible to said observer and to undergo immediately before and after said interval of time an angular jump in their rotation over an angle less than or substantially equal to the angle of opening (α) of the beams.

2. Guiding equipment according to claim 1 in which the rate of rotation of the beams, at least in said capture zone is variable according to a generally sinusoidal function of time.

3. Equipment according to either claim 1 or claim 2, in which the timing means is arranged to cause each of said beams to undergo a succession of angular jumps in their rotation, separated by fixed time intervals.

4. Equipment according to claim 3 in which the said angular jumps are constant and less than or equal to the angle of opening of the beams.

5. Equipment according to claim 3, in which said time intervals vary inversely with the angle formed by the beam (3, 3') and the approach path (2).

6. Equipment according to any preceding claim, in which the time interval for which said beams are effectively stationary when they define said region of tolerance, is equal to the interval between the appearance of one and the other of the two beams in the immediate neighbourhood of said region and is fixed so as to be sufficient to define an intermittent effect detectable by the said observer outside the tolerance region.

7. Equipment according to claim 3, in which the sweeping time of the capture zone by the said beams is appreciably less than one period of the sweeping action.

8. Equipment according to claim 7 in which the sweeping time of the capture zone by said beams is less than half said one period.

9. Equipment according to any preceding claim, in which the luminous emitter comprises:
- a source of light (101);
- an optical system (102,103, 104, 105) producing a collimated beam (3, 3') having an angle of opening which has been determined;
- a means of sweeping comprising a step-by-step motor (108) for driving the beam in rotation associated with means of control (200), to produce a determined sequence of angular jumps within the said rotation; and
- a shutter (109) associated with the said optical system to define at least the said capture zone (5).

10. Equipment according to claim 9, wherein the said shutter (109) includes also coloured filters (109c) integrated with it and defining angular ranges outside the capture zone, immediately on each side of the latter.

11. A method of providing azimuth guidance along an approach path from a distance for an observer, for example in an aircraft, the method including;
- defining a capture zone in angle on each side of the approach path;
- providing at least one set of two sweeping beams of light of substantially the same angle of opening in the direction of the sweep, one beam on each side of the approach path, rotating in opposite directions and mutually synchronised so that they are simultaneously visible to said observer when said observer is on said approach path and each is otherwise intermittently visible to said observer, the sequence of visibility of the two beams being indicative of the position of the approach path relative to the observer;
- arranging the rate of rotation of said beams, at least in said capture zone, to be variable;
characterised in that the sweeping action of the beams is arranged to be discontinuous over at least a central part of said capture zone and that the beams are arranged to be stationary for a predetermined interval of time when substantially aligned with said approach path to define a range of tolerance of error in azimuth within which the two beams are simultaneously visible to said observer and immediately before and after said interval of time to make an angular jump in their rotation over an angle less than or substantially equal to the angle of opening of the beams.

12. A method according to claim 11 in which the rate of rotation of the beams, at least in said capture zone is variable according to a generally sinusoidal function of time.

13. A method according to either claim 11 or claim 12 in which the time interval for which said beams are effectively stationary when they define said region of tolerance, is arranged to be equal to the interval between the appearance of one and the other of the two beams in the immediate neighbourhood of said region and is fixed so as to be sufficient to define an intermittent effect detectable by the said observer outside the tolerance region.

## Patentansprüche

1. Anlage zur Führung eines Beobachters (6) im Azimut aus einer Entfernung innerhalb einer Fangzone (5), die durch einen Winkel an den beiden Seiten eines Annäherungsweges (2) definiert ist, wobei die Anlage wenigstens eine Gruppe von zwei Lichtquellen (4, 4') umfaßt, die an den beiden Seiten des Annäherungsweges angeordnet sind und miteinander durch einen drehbaren Antrieb so verbunden sind, daß sie zusammen zwei schwenkende Strahlen (3, 3') mit etwa demselben Öffnungswinkel (α) in der Schwenkungsrichtung erzeugen, daß sie sich in entgegengesetzten Richtungen drehen, und daß sie miteinander synchronisiert sind, so daß jeder für den Beobachter (6) intermittierend in einer Reihenfolge sichtbar ist, die die Position des Annäherungsweges (2) darstellt, und die für den Beobachter gleichzeitig sichtbar sind, wenn dieser sich auf dem Annäherungsweg befindet, wobei die Drehgeschwindigkeit der Strahlen wenigstens in der Fangzone veränderbar ist, dadurch gekennzeichnet, daß der Antrieb so ausgebildet ist, daß die Schwenkaktion der Strahlen über wenigstens einem mittleren Teil (-E, +E) der Fangzone diskontinuierlich ist, daß Zeitsteuermittel vorgesehen sind, die bewirken, daß die Strahlen während eines vorgegebenen Zeitintervalls (-t1, +t1) wirklich stationär sind, wenn sie mit dem Annäherungsweg weitgehend fluchten, um einen Toleranzbereich des Azimutfehlers zu definieren, innerhalb von dem die beiden Strahlen für den Beobachter gleichzeitig sichtbar sind, und daß die Strahlen unmittelbar vor und nach dem Zeitintervall einen Winkelsprung in ihrer Drehung um einen Winkel erfahren, der kleiner als oder etwa gleich dem Öffnungswinkel (α) der Strahlen ist.

2. Führungsanlage nach Anspruch 1, bei der die Drehgeschwindigkeit der Strahlen wenigstens in der Fangzone gemäß einer allgemein sinusförmigen Zeitfunktion veränderbar ist.

3. Anlage nach Anspruch 1 oder 3, bei der die Zeitsteuermitel so ausgebildet sind, daß sie bewirken, daß jeder Strahl bei seiner Drehung eine Sequenz von durch feste Zeitintervalle getrennten Winkel sprüngen erfährt.

4. Anlage nach Anspruch 3, bei der die Winkelsprünge konstant und kleiner als oder gleich dem Öffnungswinkel der Strahlen sind.

5. Anlage nach Anspruch 3, bei der die Zeitintervalle sich umgekehrt mit dem Winkel ändern, der durch den Strahl (3, 3') und den Annäherungsweg (2) gebildet wird.

6. Anlage nach einem der vorhergehenden Ansprüche, bei der das Zeitintervall, in dem die Strahlen wirklich stationär sind, wenn sie den Toleranzbereich definieren, gleich dem Intervall zwischen dem Erscheinen des einen oder des anderen der beiden Strahlen in der unmittelbaren Nachbarschaft des Bereichs ist und so festgelegt ist, daß es ausreicht, eine intermittierende Wirkung zu definieren, die von dem Beobachter außerhalb des Toleranzbereiches feststellbar ist.

7. Anlage nach Anspruch 3, bei der die Zeit, in der die Strahlen über die Fangzone schwenken, nennenswert kleiner als eine Periode der Schwenkaktion ist.

8. Anlage nach Anspruch 7, bei der die Zeit, in der die Strahlen über die Fangzone schwenken, kleiner als die Hälfte der einen Periode ist.

9. Anlage nach einem der vorhergehenden Ansprüche, bei der der leuchtende Sender umfaßt:
eine Lichtquelle (101);
ein optisches System (102, 103, 104, 105), das einen kollimierten Strahl (3, 3') mit einem Öffnungswinkel erzeugt, der bestimmt worden ist;
Mittel zum Schwenken, die in Verbindung mit Steuermitteln (200) einen Schrittmotor (108) umfassen, um den Strahl in Drehung zu versetzen und eine bestimmte Sequenz von Winkelschritten innerhalb der Drehung zu erzeugen; und
eine Blende (109), die dem optischen System zugeordnet ist, um wenigstens die Fangzone (5) zu definieren.

10. Anlage nach Anspruch 9, bei der die Blende (109) ferner farbige Filter (109e) enthält, die mit ihr integriert sind und Winkelbereiche außerhalb der Fangzone unmittelbar an deren beiden Seiten definieren.

11. Verfahren zum Vorsehen einer azimutalen Führung für einen Beobachter aus einer Entfernung entlang eines Annäherungsweges, beispielsweise in einem Flugzeug, umfassend:
Definieren einer Fangzone in einem Winkel an beiden Seiten des Annäherungsweges;
Vorsehen wenigstens einer Gruppe von zwei schwenkenden Lichtstrahlen mit etwa demselben Öffnungswinkel in Richtung der Schwenkung, wobei sich auf jeder Seite des Annäherungsweges ein Strahl befindet, wobei sich die Strahlen in entgegengesetzten Richtungen drehen und gegenseitig synchronisiert sind, so daß sie für den Beobachter gleichzeitig sichtbar sind, wenn dieser sich auf dem Annäherungsweg befindet, und jeder sonst für den Beobachter intermittierend sichtbar ist, wobei die Sequenz der Sichtbarkeit der beiden Strahlen die Position des Annäherungsweges relativ zu dem Beobachter angibt;
Arrangieren der Drehgeschwindigkeit der Strahlen, daß sie wenigstens in der Fangzone veränderbar ist;
dadurch gekennzeichnet,
daß die Schwenkaktion der Strahlen so arrangiert wird, daß sie über wenigstens einen mittleren Teil der Fangzone diskontinuierlich ist, und daß die Strahlen während eines vorgegebenen Zeitintervalls stationär sind, wenn sie etwa mit dem Annäherungsweg fluchten, um einen Toleranzbereich für einen Azimutfehler zu definieren, in dem die beiden Strahlen für den Beobachter gleichzeitig sichtbar sind, und um unmittelbar vor und nach dem Zeitintervall in ihrer Drehung Winkelsprünge über einem Winkel zu machen, der kleiner als oder gleich dem Öffnungswinkel der Strahlen ist.

12. Verfahren nach Anspruch 11, bei dem die Drehgeschwindigkeit der Strahlen wenigstens in der Fangzone gemäß einer allgemein sinusförmigen Zeitfunktion veränderbar ist.

13. Verfahren nach Anspruch 11 oder 12, bei dem das Zeitintervall, bei dem die Strahlen wirklich stationär sind, wenn sie den Toleranzbereich definieren, gleich dem Intervall zwischen dem Erscheinen des einen oder des anderen der beiden Strahlen in der unmittelbaren Nachbarschaft des Bereiches ist und so festgelegt ist, daß es ausreicht, um einen intermittierenden Effekt zu definieren, der von dem Beobachter außerhalb des Toleranzbereiches feststellbar ist.

## Revendications

1. Equipement servant au guidage azimutal, à distance, d'un observateur (6) à l'intérieur d'une zone de capture (5) définie de façon angulaire sur les deux côtés d'un chemin d'approche (2), l'équipement comprenant au moins un ensemble de deux sources de lumière (4, 4') placées sur les deux côtés du chemin d'approche et reliées au moyen d'une commande par rotation, de sorte que, ensemble, elles produisent deux faisceaux de balayage (3, 3'), formant à peu près le même angle d'ouverture (α) dans la direction dudit balayage, tournant dans des directions opposées et synchronisés mutuellement, de sorte que chaque faisceau est visible de façon intermittente audit observateur (6) dans un ordre représentatif de la position dudit chemin d'approche (2), et visible simultanément audit observateur lorsque ledit observateur est sur ledit chemin d'approche, la vitesse de rotation des faisceaux, au moins dans ladite zone de capture, étant variable, caractérisé en ce que la commande est configurée de sorte que l'action de balayage desdits faisceaux est discontinue au moins sur une partie centrale (-E, +E) de ladite zone de capture, un moyen de synchronisation étant prévu pour que chacun desdits faisceaux soit effectivement fixe pendant un intervalle de temps prédéterminé (-t1, +t1), lorsqu'ils sont à peu près alignés avec ledit chemin d'approche pour définir une plage de tolérance d'erreur azimutale, plage à l'intérieur de laquelle les deux faisceaux sont simultanément visibles audit observateur, et pour subir, immédiatement avant et après ledit intervalle de temps, un saut angulaire, dans leur rotation, d'un angle inférieur ou à peu près égal à l'angle d'ouverture (α) des faisceaux.

2. Equipement de guidage selon la revendication 1, dans lequel la vitesse de rotation des faisceaux, au moins dans ladite zone de capture, est variable selon une fonction de temps généralement sinusoïdale.

3. Equipement selon la revendication 1 ou 2, dans lequel le moyen de synchronisation est configuré pour que chacun desdits faisceaux subisse une succession de sauts angulaires dans leur rotation, séparés par des intervalles de temps fixés.

4. Equipement selon la revendication 3, dans lequel lesdits sauts angulaires sont constants et inférieurs ou égaux à l'angle d'ouverture des faisceaux.

5. Equipement selon la revendication 3, dans lequel lesdits intervalles de temps varient de façon inverse par rapport à l'angle formé par les faisceaux (3, 3') et le chemin d'approche (2).

6. Equipement selon l'une quelconque des revendications précédentes, dans lequel l'intervalle de temps, pendant lequel lesdits faisceaux sont effectivement fixes lorsqu'ils définissent ladite région de tolérance, est égal à l'intervalle entre l'apparition de l'un et de l'autre des deux faisceaux dans le voisinage immédiat de ladite région, et est fixé de façon à être suffisant pour définir un effet intermittent détectable par ledit observateur en dehors de la région de tolérance.

7. Equipement selon la revendication 3, dans lequel le temps de balayage de la zone de capture par lesdits faisceaux est de façon appréciable inférieur à une période de l'action de balayage.

8. Equipement selon la revendication 7, dans lequel le temps de balayage de la zone de capture par lesdits faisceaux est inférieur à la moitié de ladite période.

9. Equipement selon l'une quelconque des revendications précédentes, dans lequel l'émetteur lumineux comprend :
- une source de lumière (101) ;
- un système optique (102, 103, 104, 105) produisant des faisceaux collimatés (3, 3'), ayant un angle d'ouverture qui a été déterminé ;
- un moyen de balayage comprenant un moteur pas à pas (108) servant à entraîner le faisceau en rotation, associé au moyen de commande (200) pour produire une séquence déterminée de sauts angulaires à l'intérieur de ladite rotation ; et
- un obturateur (109) associé audit système optique pour définir au moins ladite zone de capture (5).

10. Equipement selon la revendication 9, dans lequel ledit obturateur (109) comprend également des filtres de couleur (109c) intégrés à l'obturateur et définissant des plages angulaires en dehors de la zone de capture, immédiatement de chaque côté de cette dernière.

11. Procédé permettant de fournir, à un observateur, un guidage azimutal à distance, le long d'un chemin d'approche, par exemple dans un aéronef, le procédé comprenant :
- la définition d'une zone de capture configurée de façon angulaire de chaque côté du chemin d'approche ;
- la réalisation au moins d'un ensemble de deux faisceaux lumineux de balayage formant à peu près le même angle d'ouverture dans la direction du balayage, un faisceau placé de chaque côté du chemin d'approche, tournant dans des directions opposées et mutuellement synchronisés, de sorte qu'ils sont simultanément visibles audit observateur lorsque ledit observateur se trouve sur ledit chemin d'approche, et chaque faisceau est sinon visible de façon intermittente audit observateur, la séquence de visibilité des deux faisceaux indiquant la position du chemin d'approche par rapport à l'observateur ;
- le réglage de la vitesse de rotation desdits faisceaux, au moins dans ladite zone de capture, pour que cette vitesse soit variable ;
caractérisé en ce que l'action de balayage des faisceaux est réalisée pour être discontinue au moins sur une partie centrale de ladite zone de capture, et en ce que les faisceaux sont configurés pour être fixes pendant un intervalle de temps prédéterminé lorsqu'ils sont à peu près alignés avec ledit chemin d'approche pour définir une plage de tolérance d'erreur azimutale, plage à l'intérieur de laquelle les deux faisceaux sont simultanément visibles audit observateur et pour faire, immédiatement avant et après ledit intervalle de temps, un saut angulaire, dans leur rotation, d'un angle inférieur ou à peu près égal à l'angle d'ouverture des faisceaux.

12. Procédé selon la revendication 11, dans lequel la vitesse de rotation des faisceaux, au moins dans ladite zone de capture, est variable selon une fonction de temps généralement sinusoïdale.

13. Procédé selon la revendication 11 ou 12, dans lequel l'intervalle de temps, pendant lequel lesdits faisceaux sont effectivement fixes lorsqu'ils définissent ladite région de tolérance, est configuré pour être égal à l'intervalle entre l'apparition de l'un et de l'autre des deux faisceaux dans le voisinage immédiat de ladite région, et est fixé de façon à être suffisant pour définir un effet intermittent détectable par ledit observateur en dehors de la région de tolérance.
